# EUROPEAN PATENT SPECIFICATION

(11) **EP 2 900 742 B1**
(45) Date of publication and mention of the grant of the patent: **22.01.2020**
(21) Application number: 13759672.2
(22) Date of filing: 10.09.2013
(51) Int. Cl.: C08J 7/12, C08K 5/5393

(54) **PROCESS FOR PREPARING A POLYPROPYLENE-BASED OBJECT HAVING AN INCREASED SURFACE ENERGY**
PROZESS ZUR HERSTELLUNG EINES POLYPROPYLENBASIERTEN OBJEKTES MIT ERHÖHTER OBERFLÄCHENENERGIE
PROCÉDÉ DE PRÉPARATION D'UN OBJET À BASE DE POLYPROPYLÈNE AYANT UNE ÉNERGIE DE SURFACE ACCRUE

(30) Priority: 28.09.2012 EP 12006787
(43) Date of publication of application: 05.08.2015
(73) Proprietor: Clariant International Ltd, 4132 Muttenz (CH)
(72) Inventor: DONGIOVANNI, Ernesto, F-68330 Horbourg-Wihr (FR); SUPAT, Korada, Nhong Kakha (TH)
(74) Representative: Mikulecky, Klaus
(86) International application number: PCT/EP2013/002714
(87) International publication number: WO 2014/048546

(56) References cited:
- EP-A1- 2 014 438
- EP-B1- 0 530 984
- WO-A1-00/12605
- WO-A1-02/066551
- WO-A1-2009/137401
- WO-A1-2011/083045
- US-A1- 2008 181 969
- US-B1- 6 420 461
- DATABASE WPI Week 200427 Thomson Scientific, London, GB; AN 2004-286202 XP002690939, & JP 2003 292954 A (YOSHITOMI FINE CHEM KK) 15 October 2003 (2003-10-15)
- DATABASE CA [Online] CHEMICAL ABSTRACTS SERVICE, COLUMBUS, OHIO, US; 14 June 2013 (2013-06-14), YE, DANYING ET AL: "preparation of photostable antimicrobial polypropylene material product", XP002716619, retrieved from STN Database accession no. 2013:932002 & CN 103 144 392 A (KINGFA SCIENCE AND TECHNOLOGY CO., LTD., PEOP. REP. CHINA) 12 June 2013 (2013-06-12)
- DATABASE CA [Online] CHEMICAL ABSTRACTS SERVICE, COLUMBUS, OHIO, US; HUANG, WEIDONG ET AL: "Manufacture method for polypropylene resin compositions for manufacture of ultrahigh-speed biaxially oriented drawn thin films with transparency", XP002716620, retrieved from STN Database accession no. 2009:1544504 & CN 101 597 403 A (SINOPEC SHANGHAI PETROCHEMICAL CO., LTD., PEOP. REP. CHINA) 9 December 2009 (2009-12-09)

## Description

The present invention relates to a process for preparing a coated polypropylene-based object having an increased surface energy, according to claim 1.

The invention further relates to a multi-layer structure comprising a coated polypropylene-based object according to claim 6.

Furthermore, the invention relates to the use of specific compounds as surface energy retention agents, according to claim 8.

Polypropylene-based films (hereinafter also referred to as "PP films") are extensively used in e.g. food packaging applications, mainly in the form of multilayer structures. These films are mostly manufactured by using either a cast mono-axial stretching process (leading to cast polypropylene, so-called "CPP") or a bioriented stretching process (leading to biaxially oriented polypropylene, so-called "BOPP").

The manufactured films can then be coated with a particular additional layer in order to provide additional properties not inherent to the PP films. For example, an aluminium layer can be coated onto the surface of a PP film to balance the low vapour barrier properties of the latter. The resulting multilayer structure can be used for packaging food sensitive to humidity, e.g. potato chips.

Prior to the coating, the PP film is generally subjected to a surface treatment for increasing its surface energy and thus improving adhesion with the additional layer. Different techniques can be used for this surface energy increasing treatment step, involving corona discharge treatment, plasma treatment or even surface flaming.

The extent of the resulting increase in surface energy of the PP film can be assessed by measuring the dyne level. A non-treated PP film shows a dyne level of about 32 to 34 dyne/cm, whereas a typical corona discharge treatment as used to treat CPP or BOPP to metallization grades increases the dyne level to above 45 dyne/cm.

However, such an increased dyne level is only temporary and with time decreases to the original dyne level of 32 to 34 dyne/cm.

The coating of the treated PP film must thus be performed within a relatively narrow time frame in order to provide a sufficient surface energy and thus adhesion to the addition layer.

In order to allow for a higher flexibility with regard to the coating after the surface energy increasing treatment step, it would be desirable to retain the increased surface energy for a longer duration.

One approach for achieving an improved response to a surface energy increasing treatment is disclosed in US 2010/0261016, which relates to the process for the production of a polypropylene article comprising the step of providing a polypropylene comprising metallocene-catalyzed polyethylene, subsequently forming an article, and subjecting said article to a treatment that increases surface energy. This process has however the drawback that apart from polypropylene an additional polymeric component in the form of the metallocene-catalyzed polyethylene is required, which renders the process more complex. Also, the properties of the resulting polymeric blend are relatively difficult to control due to the presence of the further polymeric component.

WO 2009/137401 discloses in example 1 the formation of a four-layer structure comprising a color layer, a translucent color layer and a backing layer. The backing layer for instance 40 -95 % of polypropylene and 0 - 1% of "Hostanox PEP-Q" which is a phosphonite derivative falling within the formula (I).

It is to be noted that the color layer and the translucent color layer also comprise polypropylene and "Hostanox PEP-Q".

WO 2009/137401 discloses several embodiments of different layers of the multi-length structure.

WO 2002/066551 discloses the processing of polypropylene with "Sandostab P-EPQ".

WO 2000/12605 discloses a composition comprising polypropylene, an effective amount of an N,N-dialkylhydroxylamine, and an effective amount of tetrakis (2,4-di-tert.-butylphenyl)-4,4'-biphenylene diphosphite.

US 2008/181969 discloses a polymer composite comprising for instance polypropylene, Hostanox O10 and Sandostab P-EPQ, which can be processed into films.

JP 2003/292954 discloses a composition comprisingi tetrakis (2,4-di-tertiary butyl-5-methylphenyl)-4,4'-biphenylene phosphonite and polypropylene.

EP 2014438 discloses a process for the production of polypropylene articles with improved response to surface energy increasing treatment.

None of the afore mentioned documents, however, disclose a process for a multilayer structure with increased surface energy according to the present invention for which a skilled artisan must make several selections.

It is, thus, an object of the present invention to provide a simple and safe process for preparing a polypropylene-based object, and in particular a PP film, having an increased surface energy, said process allowing the increased surface energy to be retained for a longer duration than with a conventional process.

The object of the present invention is solved by the process according to claim 1. Preferred embodiments are given in the dependent claims.

The present invention thus relates to a process comprising the subsequent steps of
a) providing a polypropylene resin,
b) forming an object of said polypropylene resin,
c) subjecting the surface of the object to a surface energy increasing treatment step, and
d) coating the surface of the object with a layer after the surface energy increasing treatment step.

According to claim 1, the polypropylene resin used comprises
A) at least one secondary antioxidant of formula (I) 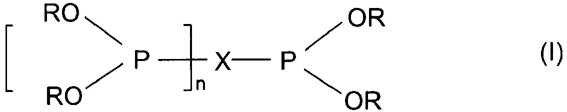 in which
   - n: is 0 or 1,
   - each R: may be the same or different and is an unsubstituted phenyl group or a phenyl group substituted by one or two alkyl groups having from 1 to 12 carbon atoms, and
   - X: is a residue of a monofunctional or difunctional phenyl group, diphenyl group, diphenyl ether group or dibenzofuranyl group,
   and/or of formula (II) 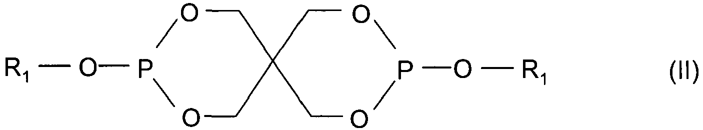 in which
   - R₁: is a C₁₈H₃₇ group or is a phenyl group substituted with two tert.-butyl groups,
B) at least one primary antioxidant, in particular selected from the group consisting of a sterically hindered phenol or a sterically hindered amine, and
C) at least one acid scavenger, in particular selected from the group consisting of a hydrotalcite, a metal stearate and a metal oxide.

In general, a secondary antioxidant (also referred to as A/O2) is an antioxidant that stabilizes a polymer by reducing hydroperoxides, which are formed in the course of an auto-oxidation process, to form stable alcohols.

The suitability of the compound according to formula (I) as a secondary antioxidant has been described in US-B-5,017,633, the disclosure of which is incorporated herewith in its entirety by reference.

It has now surprisingly been found that when using a compound according to formula (I) and/or formula (II) in a polypropylene resin, the increased surface energy achieved by subjecting the object to a surface energy increasing treatment, such as corona discharge treatment, can be retained for a longer duration than when said compound is absent. The compound thus acts as a surface energy retention agent.

This surface energy retention allows for a much higher flexibility with regard to the coating of the object. A "refresher" treatment, as e.g. referred to in US 2010/0261016, for restoring the increased surface energy can, thus, be omitted. Consequently, additional time and cost that typically accompany such a refresher treatment can be avoided.

Ultimately, the present invention, thus, allows a multi-layer structure complying with highest quality standards to be achieved in a very cost-efficient manner.

Given the low toxicity of the compound according to formula (I), the multi-layer structures can promptly be used for e.g. the packaging of food and/or a pharmaceutical/medicinal product.

The term "polypropylene" as used in the context of the present invention is to be interpreted broadly and encompasses polypropylene homopolymers as well as random copolymers and heterophasic copolymers of propylene. The random copolymers and heterophasic copolymers are copolymers of propylene and at least one further comonomer, said comonomer being preferably ethylene and/or at least one alpha-olefin having from 4 to 10 carbon atoms, such as 1-butene, 1-hexene or 1-octene.

As mentioned, the groups R in formula (I) above may be the same or different, but are preferably identical. It is further preferred that R is a dialkyl phenyl group, more preferably a 2,4-dialkyl phenyl group, particularly one in which the 2-alkyl group is branched. It is further preferred that the 4-alkyl group is also branched; the most preferred R group is 2,4-di-tert-butylphenyl.

Preferably, the polypropylene resin comprises a mixture of components falling within the definition of A) according to claim 1.

More preferably, it comprises the product of condensing 4 mols of 2,4-di-tert.-butylphenol per mol of the product of the Friedel-Crafts reaction of 2 mols of phosphorus trichloride per mol of biphenyl, as described, for instance, in US-B-4,075,163, the disclosure of which, particularly column 1, line 13 to column 4, line 9 and Example 12, is incorporated herein by reference.

According to a particularly preferred embodiment, the polypropylene resin comprises a mixture composed of:
i) 60 - 65 parts of the diphosphonite of formula (1x) 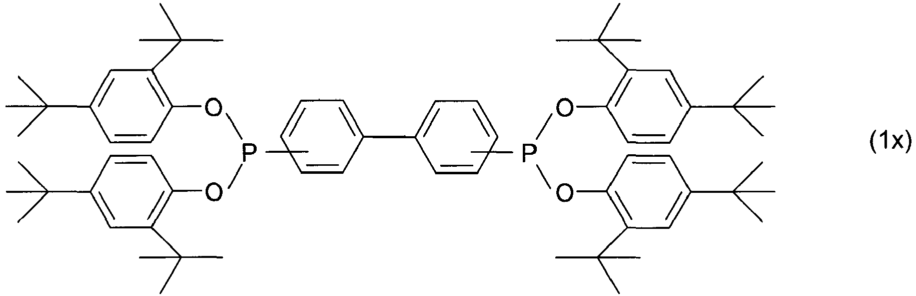 (tetrakis(2,4-di-tert.-butylphenyl)biphenylene diphosphonite)
ii) 10 - 15 parts of the monophosphonite of formula (1y) 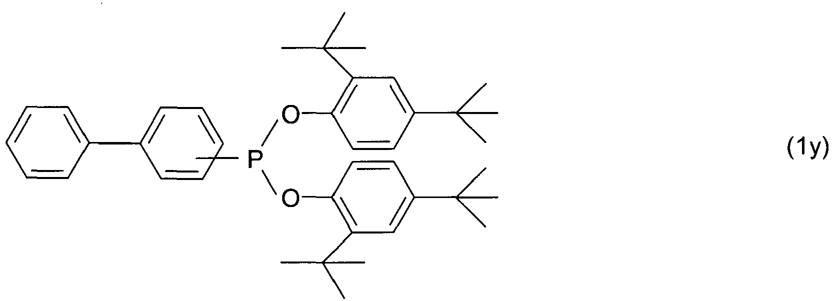 (bis(2,4-di-tert.butylphenyl)biphenylene monophosphonite)
iii) 10 - 15 parts of the phosphite of formula /1z) 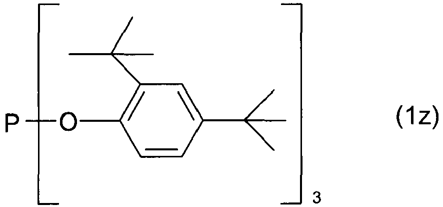 (tris(2,4-di-tert.-butylphenyl)phosphite);
iv) up to 3.5 parts of 2,4-di-tert.butylphenol;
v) up to 1 % of inorganic chloride;
vi) up to 0.5 % of volatile matters; and
vii) up to 5 % of the compound of the formula

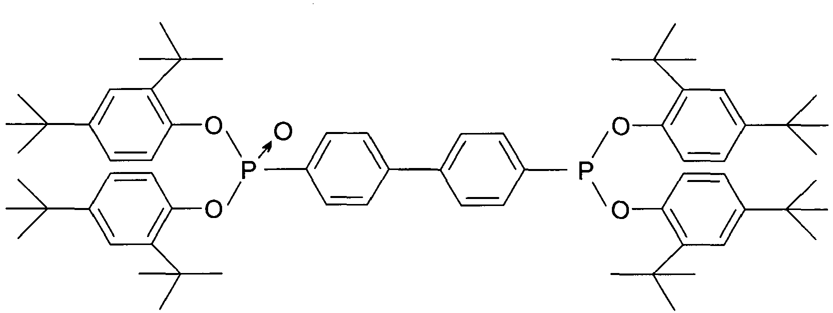

This mixture of components i) - vii) is commercially available as Hostanox® P-EPQ from CLARIANT International Ltd., Switzerland, which is particularly suitable for the present invention. In the foregoing description of Hostanox® P-EPQ, parts and percentages are by weight based on 100 parts, by weight, of total components i) - vii).

In another embodiment of the invention, the at least one secondary antioxidant A) is of the formula (II) 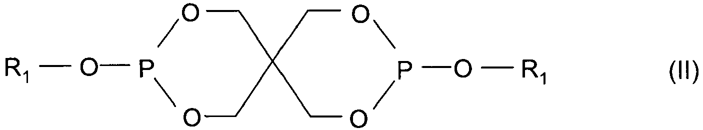 in which
R₁ is a C₁₈H₃₇ alkyl group, known as Ultranox® 618, or R₁ is a phenyl group substituted with two tert.-butyl groups, preferably in 2,4-position, known as Ultranox® 626.

Preferably, the total amount of the at least one secondary antioxidant A ranges from 0.01 wt.-% to 0.5 wt.-%, preferably from 0.03 wt.-% to 0.2 wt.-%, based on the total weight of the polypropylene resin, thus leading to an optimal retention of the increased surface energy.

Besides the above described effect of improving the retention of an increased surface energy of the object, the compound of formula I being a secondary antioxidant also contributes to the stability of the polypropylene resin.

This is on the one hand due to the compound functioning as a stabilizer to protect the polyolefin from thermal degradation while it is exposed to high processing temperatures, thus ensuring excellent colour stability as well as constant melt viscosity.

On the other hand, the compound also acts as a long-term stabilizer, e.g. as a co-stabilizer in combination with a primary antioxidant, such as a sterically hindered phenol or a sterically hindered amine.

According to the present invention, the polypropylene resin further comprises
B) at least one primary antioxidant (also referred to as A/O1), in particular selected from the group consisting of a sterically hindered phenol or a sterically hindered amine.

If the at least one primary antioxidant B is a sterically hindered phenol, it may be one of the known 2,6-dialkyl phenol derivatives, particularly a 2,6-di-tert-butylphenyl or 2-methyl-6-tert-butylphenyl derivative.

Specific examples of the primary antioxidant(s) B are the following:
B.1.) Alkylated monophenols, for example 2,6-di-tert-butyl-4-methylphenol, 2-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-([alpha]-methylcyclohexyl)-4,6-dimethylphenol, 2,6-dioctadecyl-4-methylphenol, 2,4,6-tricyclohexylphenol, 2,6-di-tert-butyl-4-methoxymethylphenol, linear or sidechain-branched nonylphenols, such as 2,6-di-nonyl-4-methylphenol, 2,4-dimethyl-6-(1-methylundec-1'-yl)-phenol, 2,4-dimethyl-6-(1'-methylheptadec-1'-yl)-phenol, 2,4-dimethyl-6-(1'-methyltridec-1'-yl)phenol and mixtures thereof;
B.2.) Alkylthiomethylphenols, for example 2,4-dioctylthiomethyl-6-tert-butylphenol, 2,4-dioctylthiomethyl-6-methylphenol, 2,4-dioctylthiomethyl-6-ethylphenol and 2,6-didodecylthiomethyl-4-nonylphenol;
B.3.) Hydroquinones and alkylated hydroquinones, for example 2,6-di-tert-butyl-4-methoxyphenol, 2,5-di-tert-butylhydroquinone, 2,5-di-tert-amylhydroquinone, 2,6-diphenyl-4-octadecyloxyphenol, 2,6-di-tert-butylhydroquinone, 2,5-di-tert-butyl-4-hydroxyanisole, 3,5-di-tert-butyl-4-hydroxyanisole, 3,5-di-tert-butyl-4-hydroxyphenyl stearate and bis(3,5-di-tert-butyl-4-hydroxyphenyl) adipate;
B.4.) Hydroxylated thiodiphenyl ethers, for example 2,2'-thiobis(6-tert-butyl-4-methylphenol), 2,2'-thiobis(4-octylphenol), 4,4'-thiobis(6-tert-butyl-3-methylphenol), 4,4'-thiobis(6-tert-butyl-2-methylphenol), 4,4'-thiobis(3,6-di-sec-amylphenol) and 4,4'-bis(2,6-dimethyl-4-hydroxyphenyl) disulphide;
B.5.) Alkylidenebisphenols, for example 2,2'-methylenebis(6-tert-butyl-4-methylphenol), 2,2'-methylenebis(6-tert-butyl-4-ethylphenol), 2,2'-methylenebis[4-methyl-6-([alpha]-methylcyclohexyl)phenol], 2,2'-methylenebis(4-methyl-6-cyclohexylphenol), 2,2'-methylenebis(6-nonyl-4-methylphenol), 2,2'-methylenebis(4,6-di-tert-butylphenol), 2,2'-ethylidenebis(4,6-di-tert-butylphenol), 2,2'-ethylidenebis(6-tert-butyl-4-isobutylphenol), 2,2'-methylenebis[6-([alpha]-methylbenzyl)-4-nonylphenol], 2,2'-methylenebis[6-([alpha],[alpha]-dimethylbenzyl)-4-nonylphenol], 4,4'-methylenebis(2,6-di-tert-butylphenol), 4,4'-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methylphenyl)-3-n-dodecylmercaptobutane, bis(3-tert-butyl-4-hydroxy-5-methylphenyl)dicyclopentadiene, bis[2-(3'-tert-butyl-2'-hydroxy-5'-methylbenzyl)-6-tert-butyl-4-methylphenyl] terephthalate, 1,1-bis(3,5-dimethyl-2-hydroxyphenyl)butane, 2,2-bis(3,5-di-tert-butyl-4-hydroxyphenyl)propane, 2,2-bis(5-tert-bulyl-4-hydroxy-2-methylphenyl)-4-n-dodecylmercaptobutane, 1,1,5,5-tetra-(5-tert-butyl-4-hydroxy-2-methylphenyl)pentane and ethylene glycol bis[3,3-bis(3'-tert-butyl-4'-hydroxyphenyl)butyrate];
B.6.) O-, N- and S-benzyl compounds, for example 3,5,3',5'-tetra-tert-butyl-4,4'-dihydroxydibenzyl ether, octadecyl 4-hydroxy-3,5-dimethylbenzylmercaptoacetate, tris(3,5-di-tert-butyl-4-hydroxybenzyl)amine, bis(4-tert-butyl-3-hydroxy-2,6-dimethylbenzyl) dithioterephthalate, bis(3,5-di-tert-butyl-4-hydroxybenzyl) sulfide, isooctyl 3,5-di-tert-butyl-4-hydroxybenzylmercaptoacetate and tridecyl 4-hydroxy-3,5-di-tert-butylbenzylmercaptoacetate;
B.7.) Hydroxybenzylated malonates, for example dioctadecyl 2,2-bis(3,5-di-tert-butyl-2-hydroxybenzyl)malonate, dioctadecyl 2-(3-tert-butyl-4-hydroxy-5-methylbenzyl)malonate, didodecyl mercaptoethyl-2,2-bis(3,5-di-tert-butyl-4-hydroxybenzyl)malonate and di-[4-(1,1,3,3-tetramethylbutyl)phenyl] 2,2-bis(3,5-di-tert-butyl-4-hydroxybenzyl)malonate.
B.8.) Aromatic hydroxybenzyl compounds, for example 1,3,5-tris(3,5-di-tert-butyl-4-hydroxybenzyl)-2,4,6-trimethylbenzene, 1,4-bis(3,5-di-tert-butyl-4-hydroxybenzyl)-2,3,5,6-tetramethylbenzene and 2,4,6-tris(3,5-di-tert-butyl-4-hydroxybenzyl)phenol;
B.9.) Triazine compounds, for example 2,4-bisoctylmercapto-6-(3,5-di-tert-butyl-4-hydroxyanilino)-1,3,5-triazine, 2-octylmercapto-4,6-bis(3,5-di-tert-butyl-4-hydroxyanilino)-1,3,5-triazine, 2-octylmercapto-4,6-bis(3,5-di-tert-butyl-4-hydroxyphenoxy)-1,3,5-triazine, 2,4,6-tris(3,5-di-tert-butyl-4-hydroxyphenoxy)-1,2,3-triazine, 1,3,5-tris(3,5-di-tert-butyl-4-hydroxybenzyl) isocyanurate, 1,3,5-tris(4-tert-butyl-3-hydroxy-2,6-dimethylbenzyl) isocyanurat, 2,4,6-tris(3,5-di-tert-butyl-4-hydroxyphenylethyl)-1,3,5-triazine, 1,3,5-tris(3,5-di-tert-butyl-4-hydroxyphenylpropionyl)hexahydro-1,3,5-triazine and 1,3,5-tris(3,5-dicyclohexyl-4-hydroxybenzyl) isocyanurate;
B.10.) Benzylphosphonates, for example dimethyl 2,5-di-tert-butyl-4-hydroxybenzylphosphonate, diethyl 3,5-di-tert-butyl-4-hydroxybenzylphosphonate, dioctadecyl 3,5-di-tert-butyl-4-hydroxybenzylphosphonate, dioctadecyl 5-tert-butyl-4-hydroxy-3-methylbenzylphosphonate and the Ca salt of the monoethyl ester of 3,5-di-tert-butyl-4-hydroxybenzylphosphonic acid;
B.11.) Acylaminophenols, for example 4-hydroxylauranilide, 4-hydroxystearanilide and octyl N-(3,5-di-tert-butyl-4-hydroxyphenyl)carbamate;
B.12.) Esters of [beta]-(3,5-di-tert-butyl-4-hydroxyphenyl)propionic acid with mono-or polyhydric alcohols, e.g. with methanol, ethanol, n-octanol, isooctanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)oxalamide, 3-thiaundecanol, 3-thiapentadecanol, trimethylhexanediol, trimethylolpropane and 4-hydroxymethyl-1-phospha-2,6,7-trioxabicyclo[2.2.2]octane;
B.13.) Esters of [beta]-(5-tert-butyl-4-hydroxy-3-methylphenyl)propionic acid with mono- or polyhydric alcohols, e.g. with methanol, ethanol, n-octanol, isooctanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)oxalamide, 3-thiaundecanol, 3-thiapentadecanol, trimethylhexanediol, trimethylolpropane and 4-hydroxymethyl-1-phospha-2,6,7-trioxabicyclo[2.2.2]octane;
B.14.) Esters of [beta]-(3,5-dicyclohexyl-4-hydroxyphenyl)propionic acid with mono- or polyhydric alcohols, e.g. with methanol, ethanol, n-octanol, isooctanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)oxalamide, 3-thiaundecanol, 3-thiapentadecanol, trimethylhexanediol, trimethylolpropane and 4-hydroxymethyl-1-phospha-2,6,7-trioxabicyclo[2.2.2]octane;
B.15.) Esters of 3,5-di-tert-butyl-4-hydroxyphenylacetic acid with mono- or polyhydric alcohols, e.g. with methanol, ethanol, n-octanol, isooctanol, octadecanol, 1,6-hexanediol, 1,9-nonanecliol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis-(hydroxyethyl)oxalamide, 3-thiaundecanol, 3-thiapentadecanol, trimethylhexanediol, trimethylolpropane and 4-hydroxymethyl-1-phospha-2,6,7-trioxabicyclo[2.2.2]octane;
B.16.) Esters of 3,3-bis(3'tert-butyl-4'-hydroxyphenyl)butyric acid with mono- or polyhydric alcohols, e.g. with methanol, ethanol, n-octanol, isooctanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis-(hydroxyethyl)oxalamide, 3-thiaundecanol, 3-thiapentadecanol, trimethylhexanediol, trimethylolpropane and 4-hydroxymethyl-1-phospha-2,6,7-trioxabicyclo[2.2.2]octane;
B.17.) Amides of [beta]-(3,5-di-tert-butyl-4-hydroxyphenyl)propionic acid, e.g. N,N'-bis(3,5-di-tert-butyl-4-hydroxyphenylpropionyl)hexamethylenediamine, N,N'-bis(3,5-di-tert-butyl-4-hydroxyphenylpropionyl)trimethylenediamine and N,N'-bis(3,5-di-tert-butyl-4-hydroxyphenylpropionyl)hydrazine;
B.18.) Tocopherol, such as [alpha]-tocopherol, [beta]-tocopherol, [gamma]-tocopherol, [delta]-tocopherol and mixtures thereof (vitamin E); and
B.19.) Ascorbic acid (vitamin C).

According to a particularly preferred embodiment, the at least one primary antioxidant B is selected from the group consisting of pentaerythritol tetrakis(3-(3,5-di-tert-butyl-4-hydroxyphenyl)propionate) (available under the trade name Irganox® 1010), octadecyl-3-(3,5-di-tert.butyl-4-hydroxyphenyl)-propionate (Irganox® 1076), bis[3,3-bis-(4'-hydroxy-3'-tert-butylphenyl)butanoicacid]-glycol ester (Hostanox® O 3), tris(4-tert-butyl-3-hydroxy-2,6-dimethylbenzyl) isocyanurate (Irganox® 1790), 3,3',3",5,5',5"-hexa-tert-butyl-α,α',α"-(mesitylen-2,4,6-triyl)tri-p-kresol (Irganox® 1330), N,N'-hexamethylene bis[3-(3,5-di-t-butyl-4-hydroxyphenyl)propionamide] (Irganox® 1098) and 1,3,5-tris(3,5-di-tert-butyl-4-hydroxybenzyl)-1,3,5-triazine-2,4,6(1H,3H,5H)-trione (Irganox® 3114).

If the at least one primary antioxidant B is a sterically hindered amine, a polymer of 2,2,4-4-tetramethyl-7-oxa-3,20-diaza-dispiro [5.1.11.2] heneicosan-21-on and epichlorohydrin, known as Hostavin® N 30, is preferred.

It is particularly preferred that the total amount of the at least one primary antioxidant B ranges from 0.01 wt.-% to 0.5 wt.-%, preferably from 0.03 wt.-% to 0.2 wt.-%, based on the total weight of the polypropylene resin.

The polypropylene resin further comprises
C) at least one acid scavenger, in particular selected from the group consisting of hydrotalcite, a metal stearate and a metal oxide.

More particularly, a hydrotalcite according to the following formula can be used:

[(M²⁺)₁₋ₓ(M³⁺)ₓ(OH)₂(Aⁿ⁻)_{x/n}yH₂O],

where
- (M²⁺): is Mg, Ca, Sr, Ba, Zn, Pb, Sn, Ni
- (M³⁺): is Al, B, Bi
- Aⁿ⁻: is an anion of valency n
- n: is an integer from 1 to 4
- x: is a value between 0 and 0.5
- y: is a value between 0 and 2.

Preferably,
- Aⁿ⁻: is OH⁻, Cl⁻, Br, I⁻, ClO₄⁻, CH₃COO⁻, C₆H₅COO⁻, CO₃²⁻, SO₄²⁻, (OOC-COO)²⁻, (CHOHCOO)₂²⁻, HO(CHOH)₄CH₂COO⁻, C₂H₄(COO)₂²⁻, (CH₂COO)₂²⁻, CH₃CHOHCOO⁻, SiO₃²⁻, SiO₄⁴⁻, Fe(CN)₆³⁻, Fe(CN)₆⁴⁻, BO₃³⁻, PO₃³⁻, HPO₄²⁻.

Preference is given to employing hydrotalcites in which (M²⁺) is (Ca²⁺), (Mg²⁺) or a mixture of (Mg²⁺) and (Zn²⁺); (Aⁿ⁻) is CO₃²⁻, BO₃³⁻, PO₃³⁻; x has a value from 0 to 0.5 and y has a value from 0 to 2.

It is also possible to employ hydrotalcites that can be described by the formula

[(M²⁺)ₓ(Al³⁺)₂(OH)_{2x+6nz}(Aⁿ⁻)₂yH₂O].

Here, (M²⁺) is preferably Mg²⁺, Zn²⁺, but more preferably Mg²⁺, (Aⁿ⁻) is an anion, in particular selected from the group consisting of CO₃²⁻, (OOC-COO)²⁻, OH⁻ and S²⁻, where n describes the valency of the ion, y is a positive integral, more preferably between 0 and 5, especially between 0.5 and 5, and x and z have positive values, which in the case of x are preferably between 2 and 6 and in the case of z should be less than 2.

The hydrotalcites of the following formulae are to be regarded with particular preference:

Al₂O₃*6MgO*CO₂*12H₂O,

Mg_{4.5}Al₂(OH)₁₃*CO₃*3.5H₂O,

4MgO*Al₂O₃*CO₂*9H₂O,

4MgO*Al₂O₃*CO₂*6H₂O,

ZnO*3MgO*Al₂O₃*CO₂*8-9H₂O,

ZnO*3MgO*Al₂O₃*CO₂*5-6H₂O,

Mg_{4.5}Al₂(OH)₁₃*CO₃.

Most preferably, the hydrotalcite is selected from the group consisting of Hycite® 713 (from Clariant), DHT-4A and DHT 4B (from Kyowa), Stabiace HT-P (from Sakai) and CLC 120 (from Doobon).

Of the metal oxides, zinc oxide is particularly preferred. Of the metal stearates, calcium stearate and/or zinc stearate are particularly preferred.

It is particularly preferred that the total amount of the at least one acid scavenger C ranges from 0.05 wt.-% to 0.5 wt.-%, preferably from 0.1 wt.-% to 0.2 wt.-%, based on the total weight of the polypropylene resin.

Besides the secondary antioxidant A, the polypropylene resin according to the process of the present invention may comprise a further secondary antioxidant.

According to a further preferred embodiment, the polypropylene resin, thus, further comprises
A1) at least one further secondary antioxidant selected from the group consisting of a phosphite, phosphonite or other phosphorous based antioxidant.

In particular, the phosphite or phosphonite can, for example, be triphenyl phosphite, diphenyl alkyl phosphites, phenyl dialkyl phosphites, tris(nonylphenyl) phosphite, trilauryl phosphite, trioctadecyl phosphite, distearyl pentaerythritol diphosphite, tris(2,4-di-tert-butylphenyl) phosphite, diisodecyl pentaerythritol diphosphite, bis(2,4-di-tert-butylphenyl) pentaerythritol diphosphite, bis(2,6-di-tert-butyl-4-methylphenyl) pentaerythritol diphosphite, bisisodecyloxy pentaerythritol diphosphite, bis(2,4-di-tert-butyl-6-methylphenyl) pentaerythritol diphosphite, bis(2,4,6-tri-tert-butylphenyl) pentaerythritol diphosphite, tristearyl sorbitol triphosphite, tetrakis(2,4-di-tert-butylphenyl) 4,4'-biphenylenediphosphonite, 6-isooctyloxy-2,4,8,10-tetra-tert-butyl-12H-dibenzo[d,g]-1,3,2-dioxaphosphocin, 6-fluoro-2,4,8,10-tetra-tert-butyl-12-methyl-dibenzo[d,g]-1,3,2-dioxaphosphocin, bis(2,4-di-tert-butyl-6-methylphenyl) methyl phosphite, bis(2,4-di-tert-butyl-6-methylphenyl) ethyl phosphite, tris(2-tert-butyl-4-thio(2'-methyl-4'-hydroxy-5'-tert-butyl)phenyl-5-methyl) phenyl phosphite, 2,2',2"-nitrilo[triethyl tris(3,3',5,5'-tetra-tert-butyl-1,1'-biphenyl-2,2'-diyl) phosphite] and/or bis[2-methyl-4,6-bis(1,1-dimethylethyl)phenol]phosphorous acid ethyl ester.

Preferably, the further secondary antioxidant A1) is selected from the group consisting of tris (2,4-di-tert-butylphenyl)phosphite (available under the trade name Irgafos® 168), 2,4,8,10-tetraoxa-3,9-diphosphaspiro(5.5)undecane, bis(2,4-di-tert-butylphenyl)pentaerythritol diphosphit (Ultranox® 626), unless Ultranox® 626 is already present as component A), bis-(2,4-dicumylphenyl)pentaerythritol diphosphite (Doverphos® 9228), bis(2,6-di-tert-butyl-4-methylphenyl)pentaerythritol-diphosphite (ADK STAB PEP-36), 2-(tert-butyl)-6-methyl-4-(3-((2,4,8,10-tetrakis(tert-butyl)dibenzo[d,f][1,3,2]dioxaphosphepin-6-yl)oxy)propyl)phenol (Sumilizer® GP) and trisnonylphenylphosphit.

It is particularly preferred that the amount of the at least one secondary antioxidant A ranges from 10 to 100 wt.-%, preferably from 25 to 100 wt.-% based on the total weight of secondary antioxidants. In other words, the ratio of the amount of secondary antioxidant A to the total amount of secondary antioxidants A + A1 ranges from 1:1 to 1:10, preferably from 1:1 to 1:4.

As mentioned, the object of the process of the present invention is preferably in the form of a film, more preferably a film for packaging applications.

As also mentioned, the surface energy increasing surface treatment step preferably involves corona discharge treatment. Other techniques, such as plasma treatment and/or surface flaming, are also thinkable.

The advantages obtained by the process of the present invention become particularly apparent if the object prepared is coated with a layer after the surface energy increasing treatment step, since improved adhesion of the layer can be provided for a longer time frame after the surface energy increasing treatment. The layer may for example be an aluminium layer for increasing the vapour barrier properties of e.g. the PP film. Any other layer for imparting properties not inherent to polypropylene may likewise be applied to the object; this includes a layer for printing the surface.

The layer coated onto the object can also be an intermediate layer, which in the final multilayer structure is arranged between the object and a further layer.

Besides the process described above, the present invention also relates to a multi-layer structure according to claim 6 as well as to a composition for use in a polypropylene resin according to claim 8, e.g. as an antioxidant base package composition.

The multi-layer structure comprises said polypropylene-based object and a layer applied thereon. The term "multi-layer structure" is in the context of the present invention to be understood as a structure comprising at least one layer coated onto an object, such as a film.

Said polypropylene resin and said multi-layer structure, respectively, thus comprise
A) at least one secondary antioxidant of formula (I) and/or formula (II), said secondary antioxidant being optionally in combination with at least one further secondary antioxidant A1 selected from the group consisting of a phosphite, phosphonite or other phosphorous based antioxidant.

The polypropylene resin and the multi-layer structure, respectively, further comprise
B) at least one primary antioxidant and/or radical scavenger, in particular selected from the group consisting of a sterically hindered phenol or a sterically hindered amine, and
C) at least one acid scavenger, in particular selected from the group consisting of a hydrotalcite, a metal stearate and a metal oxide.

As will be shown in more detail in the context of the examples, the present invention allows for achieving a polypropylene object, the surface of which has a dyne level of at least 36 dyne/cm also after at least 14 days of the surface energy increasing treatment step.

According to a further aspect, the present invention thus also relates to a multi-layer structure obtainable by the above process, the surface of which having at least 14 days after the surface energy increasing treatment step a dyne level of at least 36 dyne/cm, preferably at least 37 dyne/cm, more preferably at least 38 dyne/cm.

As mentioned above, the multi-layer structure is preferably used for the packaging of food. Other applications, such as the packaging for textiles or medicinal/pharmaceutical products, are also thinkable.

As mentioned, the compound according to formula (I) and/or formula (II) acts as a surface energy retention agent, i.e. an agent that retains the surface energy, e.g. increased by a corona discharge treatment. According to still a further aspect, the present invention thus also relates to the use of the compound according to formula (I) and/or formula (II) in combination with component B) and C) as a surface energy retention agent. The present invention further relates to the use of the compound according to formula (I) and/or formula (II) in combination with component B) and C) as a surface energy retention agent.

The present invention is illustrated by way of the following specific examples:

### Examples

Irganox® 1010: 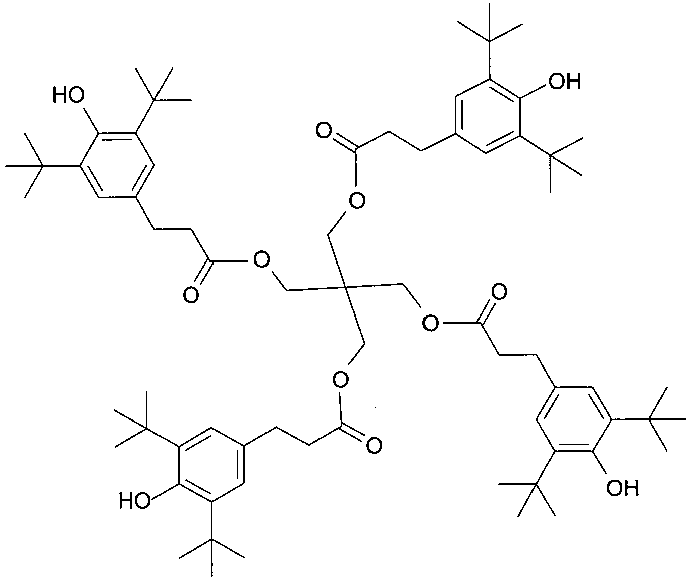
Hostanox® P-EPQ: as described before
Hostavin® N30: polymer of 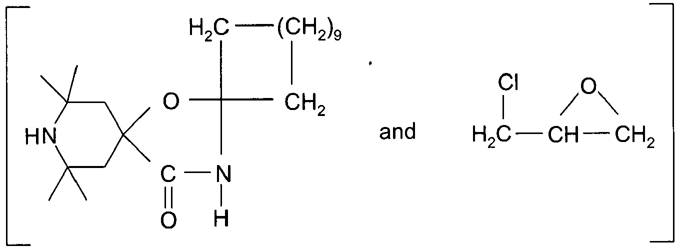
Ultranox® 618: 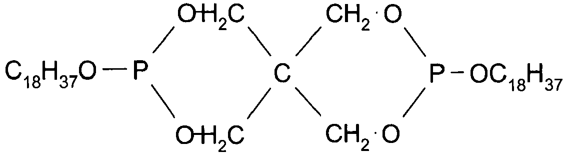
Ultranox® 626: 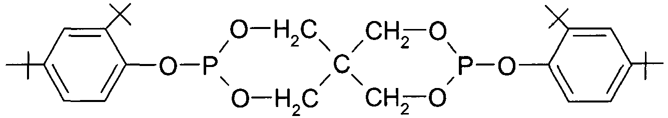
Irgafos® 168: 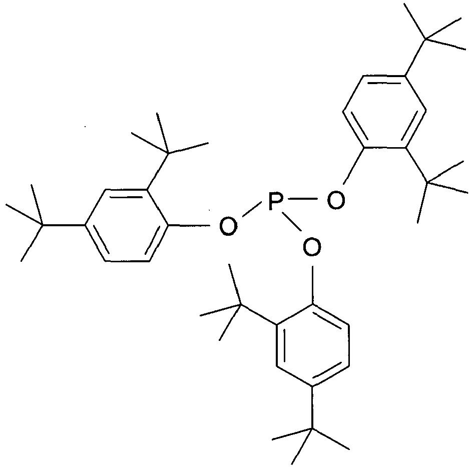
DHT-4A : Mg_{4.5}Al₂(OH)₁₃CO₃x3.5H₂O

A BOPP film grade is stabilized with an antioxidant base package composition by dry blending the polypropylene with the composition.

Specifically, polypropylene resins with the amounts of additives (wt.-% based on the total weight of the polypropylene resin) specified in Table 1 are prepared:

**Table 1**

| | Primary antioxidant / wt.-% | Secondary antioxidant / wt.-% | Acid scavenger / wt.-% |
|---|---|---|---|
| Example 1 (invention) | Irganox® 1010 / 0.05 | Hostanox® P-EPQ / 0.1 | DHT-4A / 0.04 |
| Example 2 (comparative) | Irganox® 1010 / 0.05 | Irgafos® 168/ 0.2 | DHT-4A / 0.04 |
| Example 3 (invention) | Irganox® 1010 / 0.05 | Hostanox® P-EPQ / 0.05 | DHT-4A / 0.04 |
| Example 4 (comparative) | Irganox® 1010 / 0.05 | Irgafos® 168 / 0.05 | DHT-4A / 0.04 |
| Example 5 (invention) | Irganox® 1010 / 0.05 | Ultranox® 626 / 0.05 | DHT-4A / 0.04 |
| Example 6 (invention) | Irganox® 1010 / 0.05 | Ultranox® 626 / 0.1 | DHT-4A / 0.04 |
| Example 7 (invention) | Hostavin® N30 / 0.05 | Hostanox® P-EPQ / 0.05 | DHT-4A / 0.04 |
| Example 8 (comparative) | Hostavin® N30 / 0.05 | Irgafos® 168 / 0.05 | DHT-4A / 0.04 |
| Example 9 (invention) | Hostavin® N30 / 0.05 | Hostanox® P-EPQ / 0.1 | DHT-4A / 0.04 |
| Example 10 (comparative) | Hostavin® N30 / 0.05 | Irgafos® 168 / 0.1 | DHT-4A / 0.04 |
| Example 11 (invention) | Irganox® 1010 / 0.05 | Hostanox® P-EPQ / 0.05 | calcium stearate / 0.1 |
| Example 12 (invention) | Irganox® 1010 / 0.05 | Hostanox® P-EPQ / 0.1 | calcium stearate / 0.1 |
| Example 13 (comparative) | Irganox® 1010 / 0.05 | Irgafos® 168 / 0.1 | calcium stearate / 0.1 |

To this end, mixtures comprising the respective components in the given amounts are compounded in a laboratory single screw extruder. Films of a thickness of 50 microns are blown and the films obtained are exposed to a corona treater. Dyne levels are measured immediately after corona discharge treatment and regularly for 28 days. Specifically, the dyne level determination using a dyne level pen has been performed as follows:

The test fluid has been spread from the felt tip pen over an area of approximately 7 cm of the test specimen and the time it takes for the continuous film to break into droplets has been measured. Breaking of the fluid into droplets in less than 2 seconds indicates a lack of wetting, and a lower numbered test fluid was subsequently used, whereas for a fluid which remained intact for longer than 2 seconds, a higher number test fluid was subsequently used, until the lowest number at an optimum dwell time of 2 seconds was established. The results are given in Table 2:

**Table 2**

| Dyne level | Days after corona discharge treatment | | | | | | | | | | | | | | |
|---|---|---|---|---|---|---|---|---|---|---|---|---|---|---|---|
| | 0 | 2 | 4 | 6 | 8 | 10 | 12 | 13 | 14 | 15 | 20 | 25 | 26 | 27 | 28 |
| Ex. 1 (inv.) | 52 | 48 | 48 | 42 | 40 | 38 | 38 | 38 | 38 | 38 | 38 | 38 | 36 | 36 | 36 |
| Ex. 2 (comp.) | 52 | 46 | 42 | 42 | 38 | 38 | 36 | 36 | <36 | <36 | <36 | <36 | <36 | <36 | <36 |
| Ex. 3 (inv.) | 52 | 50 | 49 | 45 | 42 | 39 | 38 | 38 | 38 | 38 | 38 | 38 | 37 | 37 | 37 |
| Ex. 4 (comp.) | 52 | 50 | 48 | 45 | 40 | 38 | 36 | 36 | <36 | <36 | <36 | <36 | <36 | <36 | <36 |
| Ex. 5 (inv.) | 52 | 51 | 50 | 47 | 45 | 40 | 38 | 37 | 37 | 37 | 37 | 37 | 37 | 37 | 37 |
| Ex. 6 (inv.) | 52 | 50 | 49 | 46 | 44 | 40 | 38 | 37 | 37 | 37 | 37 | 37 | 37 | 37 | 37 |
| Ex. 7 (inv.) | 52 | 50 | 49 | 46 | 44 | 40 | 39 | 37 | 37 | 37 | 37 | 37 | 37 | 37 | 37 |
| Ex. 8 (comp.) | 52 | 50 | 49 | 45 | 41 | 38 | 37 | 36 | <36 | <36 | <36 | <36 | <36 | <36 | <36 |
| Ex. 9 (inv.) | 52 | 50 | 50 | 46 | 42 | 40 | 38 | 37 | 37 | 37 | 37 | 37 | 37 | 37 | 37 |
| Ex. 10 (comp.) | 52 | 49 | 49 | 43 | 40 | 38 | 36 | 35 | <35 | <35 | <35 | <35 | <35 | <35 | <35 |
| Ex. 11 (inv.) | 52 | 51 | 49 | 42 | 40 | 39 | 38 | 38 | 38 | 38 | 38 | 38 | 38 | 38 | 38 |
| Ex. 12 (inv.) | 52 | 51 | 48 | 44 | 40 | 39 | 37 | 37 | 37 | 37 | 37 | 37 | 37 | 37 | 37 |
| Ex. 13 (comp.) | 52 | 50 | 48 | 43 | 40 | 38 | 36 | 35 | <35 | <35 | <35 | <35 | <35 | <35 | <35 |

As shown in Table 2, the examples of the present invention show an improved retention of the increased surface energy: 14 days after the corona discharge treatment, the PP film according to the present invention comprising Hostanox® P-EPQ or Ultranox® 626 still has dyne levels of at least 37, whereas the respective dyne levels of the comparative examples are below 36 dyne/cm.

## Claims

1. Process for preparing a coated polypropylene-based object having an increased surface energy, said process comprising the subsequent steps of
a) providing a polypropylene resin,
b) forming an object of said polypropylene resin,
c) subjecting the surface of the object to a surface energy increasing treatment step, which involves corona discharge treatment, plasma treatment and/or surface flaming, and
d) coating the surface of the object with a layer after the surface energy increasing treatment step,
**characterized in that** the polypropylene resin comprises
A) at least one secondary antioxidant
of formula (I) 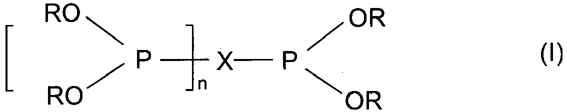 in which
n is 0 or 1,
each R may be the same or different and is an unsubstituted phenyl group or a phenyl group substituted by one or two alkyl groups having from 1 to 12 carbon atoms, and
X is a residue of a monofunctional or difunctional phenyl group, diphenyl group, diphenyl ether group or dibenzofuranyl group
and/or of formula (II) 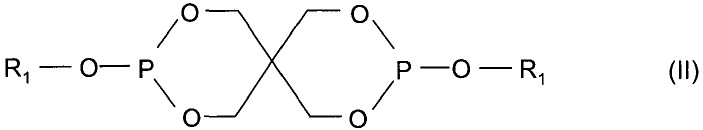 in which
R₁ is a C₁₈H₃₇ group or is a phenyl group substituted with two tert.-butyl groups, and **characterized in that** the polypropylene resin further comprises
B) at least one primary antioxidant, in particular selected from the group consisting of a sterically hindered phenol or a sterically hindered amine, and **characterized in that** the polypropylene resin further comprises
C) at least one acid scavenger, in particular selected from the group consisting of a hydrotalcite, a metal stearate and a metal oxide.

2. Process according to claim 1, wherein A) is an at least one secondary antioxidant of formula (I).

3. Process according to any of the preceding claims, **characterized in that** the total amount of the at least one secondary antioxidant A ranges from 0.01 wt.-% to 0.5 wt.-%, preferably from 0.03 wt.-% to 0.2 wt.-%, based on the total weight of the polypropylene resin.

4. Process according to claim 1, **characterized in that** the total amount of the at least one primary antioxidant B ranges from 0.01 wt.-% to 0.5 wt.-%, preferably from 0.03 wt.-% to 0.2 wt.-%, based on the total weight of the polypropylene resin.

5. Process according to claim 1, **characterized in that** the total amount of the at least one acid scavenger C ranges from 0.05 wt.-% to 0.5 wt.-%, preferably from 0.1 wt.-% to 0.2 wt.-%, based on the total weight of the polypropylene resin.

6. Multi-layer structure comprising a polypropylene-based object and a layer applied theron, wherein the polypropylene-based object has been subjected to a surface energy increasing treatment step and is obtainable by the process according to any of claims 1 to 5, the surface of which having at least 14 days after the surface energy increasing treatment step a dyne level of at least 36 dyne/cm.

7. Multi-layer structure according to claim 6, **characterized in that** the polypropylene-based object is in the form of a film.

8. Use of a compound according to formula (I) 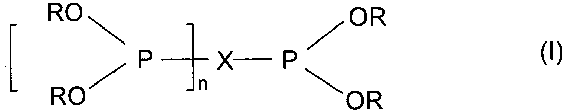 in which
n is 0 or 1,
each R may be the same or different and is an unsubstituted phenyl group or a phenyl group substituted by one or two alkyl groups having from 1 to 12 carbon atoms, and
X is a residue of a monofunctional or difunctional phenyl group, diphenyl group, diphenyl ether group or dibenzofuranyl group
and/or of formula (II) 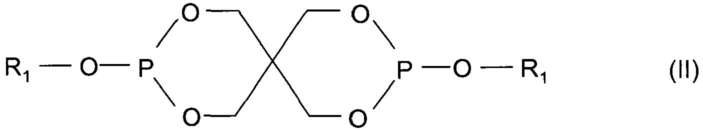 in which
R₁ is C₁₂-C₂₀-alkyl or phenyl substituted with C₁-C₆-alkyl groups in combination with B) and C) as claimed in any of the preceding claims as a surface energy retention agent for a polypropylene-based object.

## Patentansprüche

1. Verfahren zur Herstellung eines beschichteten Objekts auf Polypropylenbasis mit erhöhter Oberflächenenergie, bei dem man nacheinander:
a) ein Polypropylenharz bereitstellt,
b) ein Objekt aus dem Polypropylenharz bildet,
c) die Oberfläche des Objekts einem Behandlungsschritt zur Erhöhung der Oberflächenenergie, der eine Koronaentladungsbehandlung, Plasmabehandlung und/oder Oberflächenbeflammung umfasst, unterwirft und
d) nach dem Behandlungsschritt zur Erhöhung der Oberflächenenergie die Oberfläche des Objekts mit einer Schicht beschichtet,
**dadurch gekennzeichnet, dass** das Polypropylenharz
A) mindestens ein sekundäres Antioxidans
der Formel (I) 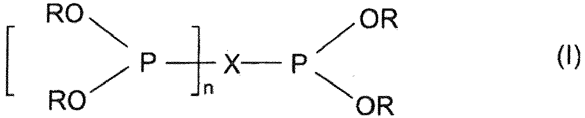 in der
n für 0 oder 1 steht,
R jeweils gleich oder verschieden sein kann und für eine unsubstituierte Phenylgruppe oder eine Phenylgruppe, die durch eine oder zwei Alkylgruppen mit 1 bis 12 Kohlenstoffatomen substituiert ist, steht und
X für einen Rest einer monofunktionellen oder difunktionellen Phenylgruppe, Diphenylgruppe, Diphenylethergruppe oder Dibenzofuranylgruppe steht,
und/oder der Formel (II) 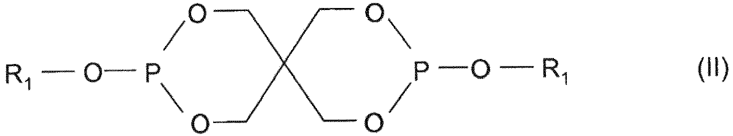 in der
R₁ für eine C₁₈H₃₇-Gruppe oder für eine Phenylgruppe, die durch zwei tert.-Butylgruppen substituiert ist, steht,
umfasst, und **dadurch gekennzeichnet, dass** das Polypropylenharz ferner
B) mindestens ein primäres Antioxidans, insbesondere aus der Gruppe bestehend aus einem sterisch gehinderten Phenol oder einem sterisch gehinderten Amin,
umfasst, und **dadurch gekennzeichnet, dass** das Polypropylenharz ferner
C) mindestens einen Säurefänger, insbesondere aus der Gruppe bestehend aus einem Hydrotalcit, einem Metallstearat und einem Metalloxid,
umfasst.

2. Verfahren nach Anspruch 1, wobei es sich bei A) um mindestens ein sekundäres Antioxidans der Formel (I) handelt.

3. Verfahren nach einem der vorhergehenden Ansprüche, **dadurch gekennzeichnet, dass** die Gesamtmenge des mindestens einen sekundären Antioxidans A im Bereich von 0,01 Gew.-% bis 0,5 Gew.-%, vorzugsweise von 0,03 Gew.-% bist 0,2 Gew.-%, bezogen auf das Gesamtgewicht des Polypropylenharzes, liegt.

4. Verfahren nach Anspruch 1, **dadurch gekennzeichnet, dass** die Gesamtmenge des mindestens einen primären Antioxidans B im Bereich von 0,01 Gew.-% bis 0,5 Gew.-%, vorzugsweise von 0,03 Gew.-% bis 0,2 Gew.-%, bezogen auf das Gesamtgewicht des Polypropylenharzes, liegt.

5. Verfahren nach Anspruch 1, **dadurch gekennzeichnet, dass** die Gesamtmenge des mindestens einen Säurefängers C im Bereich von 0,05 Gew.-% bis 0,5 Gew.-%, vorzugsweise von 0,1 Gew.-% bis 0,2 Gew.-%, bezogen auf das Gesamtgewicht des Polypropylenharzes, liegt.

6. Mehrschichtaufbau, umfassend ein Objekt auf Polypropylenbasis und eine darauf aufgebrachte Schicht, wobei das Objekt auf Polypropylenbasis einem Behandlungsschritt zur Erhöhung der Oberflächenenergie unterworfen wurde und durch das Verfahren nach einem der Ansprüche 1 bis 5 erhältlich ist, wobei dessen Oberfläche mindestens 14 Tage nach dem Behandlungsschritt zur Erhöhung der Oberflächenenergie ein Dyn-Niveau von mindestens 36 dyn/cm aufweist.

7. Mehrschichtaufbau nach Anspruch 6, **dadurch gekennzeichnet, dass** das Objekt auf Polypropylenbasis in Form einer Folie vorliegt.

8. Verwendung einer Verbindung gemäß Formel (I) 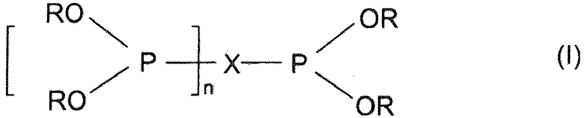 in der
n für 0 oder 1 steht,
R jeweils gleich oder verschieden sein kann und für eine unsubstituierte Phenylgruppe oder eine Phenylgruppe, die durch eine oder zwei Alkylgruppen mit 1 bis 12 Kohlenstoffatomen substituiert ist, steht und
X für einen Rest einer monofunktionellen oder difunktionellen Phenylgruppe, Diphenylgruppe, Diphenylethergruppe oder Dibenzofuranylgruppe steht,
und/oder der Formel (II) 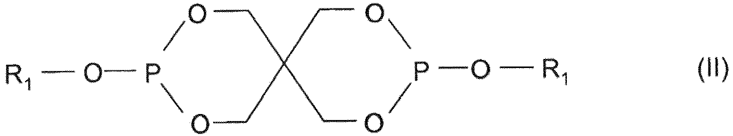 in der
R₁ für eine C₁₂C₂₀-Gruppe oder für eine Phenylgruppe, die durch C₁-C₆-Alkylgruppen substituiert ist, steht,
in Kombination mit B) und C) gemäß einem der vorhergehenden Ansprüche als Mittel zur Retention der Oberflächenenergie für ein Objekt auf Polypropylenbasis.

## Revendications

1. Procédé pour la préparation d'un objet revêtu à base de polypropylène possédant une énergie de surface augmentée, ledit procédé comprenant les étapes successives de
a) mise à disposition d'une résine de polypropylène,
b) formation d'un objet de ladite résine de polypropylène,
c) soumission de la surface de l'objet à une étape de traitement d'augmentation de l'énergie de surface, qui implique un traitement par décharge corona, un traitement au plasma et/ou un flammage de surface, et
d) revêtement de la surface de l'objet par une couche après l'étape de traitement d'augmentation de l'énergie de surface,
**caractérisé en ce que** la résine de polypropylène comprend
A) au moins un antioxydant secondaire de formule (I) 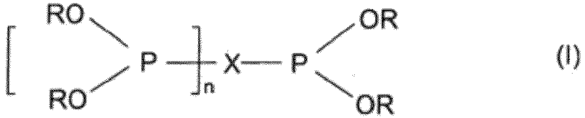 dans laquelle
n est 0 ou 1
chaque R peut être identique ou différent et est un groupe phényle non substitué ou un groupe phényle substitué par un ou deux groupe (s) alkyle possédant de 1 à 12 atome(s) de carbone, et
X est un radical d'un groupe phényle mono fonctionnel ou difonctionnel, un groupe diphényle, un groupe diphényléther ou un groupe dibenzofurannyle
et/ou de formule (II) 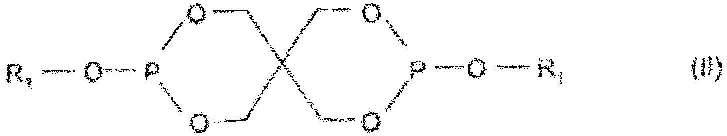 dans laquelle
R₁ est un groupe C₁₈H₃₇ ou est un groupe phényle substitué par deux groupes tert-butyle, et **caractérisé en ce que** la résine de polypropylène comprend en outre
B) au moins un antioxydant primaire, en particulier choisi dans le groupe constitué par un phénol stériquement encombré ou une amine stériquement encombrée,
et **caractérisé en ce que** la résine de polypropylène comprend en outre
C) au moins un agent de captage d'acide, en particulier choisi dans le groupe constitué par une hydrotalcite, un stéarate métallique et un oxyde métallique.

2. Procédé selon la revendication 1, A) étant au moins un antioxydant secondaire de formule (I).

3. Procédé selon l'une quelconque des revendications précédentes, **caractérisé en ce que** la quantité totale de l'au moins un antioxydant secondaire A se situe dans la plage de 0,01 % en poids à 0,5 % en poids, préférablement de 0,03 % en poids à 0,2 % en poids, sur la base du poids total de la résine de polypropylène.

4. Procédé selon la revendication 1, **caractérisé en ce que** la quantité totale de l'au moins un antioxydant primaire B se situe dans la plage de 0,01 % en poids à 0,5 % en poids, préférablement de 0,03 % en poids à 0,2 % en poids, sur la base du poids total de la résine de polypropylène.

5. Procédé selon la revendication 1, **caractérisé en ce que** la quantité totale de l'au moins un agent de captage d'acide C se situe dans la plage de 0,05 % en poids à 0,5 % en poids, préférablement de 0,1 % en poids à 0,2 % en poids, sur la base du poids total de la résine de polypropylène.

6. Structure multicouche comprenant un objet à base de polypropylène et une couche appliquée sur celui-ci, l'objet à base de polypropylène ayant été soumis à une étape de traitement d'augmentation de l'énergie de surface et pouvant être obtenu par le procédé selon l'une quelconque des revendications 1 à 5, dont la surface possède, au moins 14 jours après l'étape de traitement d'augmentation de l'énergie de surface, un niveau dyne d'au moins 36 dynes/cm.

7. Structure multicouche selon la revendication 6, **caractérisée en ce que** l'objet à base de polypropylène se trouve sous la forme d'un film.

8. Utilisation d'un composé selon la formule (I) 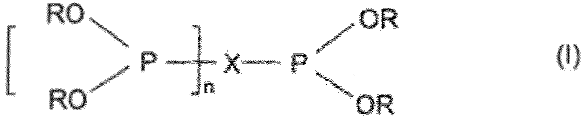 dans laquelle
n est 0 ou 1
chaque R peut être identique ou différent et est un groupe phényle non substitué ou un groupe phényle substitué par un ou deux groupe(s) alkyle possédant de 1 à 12 atome(s) de carbone, et
X est un radical d'un groupe phényle mono fonctionnel ou difonctionnel, un groupe diphényle, un groupe diphényléther ou un groupe dibenzofurannyle
et/ou de formule (II) 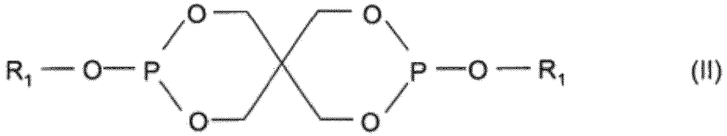 dans laquelle
R₁ est C₁₂₋₂₀-alkyle ou phényle substitué par des groupes C₁₋₆-alkyle en combinaison avec B) et C) selon l'une quelconque des revendications précédentes en tant qu'un agent de rétention de l'énergie de surface pour un objet à base de polypropylène.
